# EUROPÄISCHE PATENTSCHRIFT

(11) **EP 0 425 915 B1**
(45) Veröffentlichungstag und Bekanntmachung des Hinweises auf die Patenterteilung: **04.05.1994**
(21) Anmeldenummer: 90120031.1
(22) Anmeldetag: 19.10.1990
(51) Int. Cl.: G02B 6/44

(54) **Optisches Kabel**
Optical cable
Câble optique

(30) Priorität: 28.10.1989 DE 3936007
(43) Veröffentlichungstag der Anmeldung: 08.05.1991
(73) Patentinhaber: KABEL RHEYDT Aktiengesellschaft, D-41179 Mönchengladbach (DE)
(72) Erfinder: Delâge, Peter, W-4053 Jüchen 5 (DE); Hoffart, Michael, W-5628 Heiligenhaus (DE); Zamzow, Peter, W-4630 Bochum 1 (DE)
(74) Vertreter: Mende, Eberhard, Dipl.-Ing.

(56) Entgegenhaltungen:
- EP-A- 0 328 409
- DE-A- 3 239 667
- US-A- 4 729 628
- US-A- 4 741 594
- US-A- 4 761 053

## Beschreibung

Die Erfindung betrifft ein optisches Kabel nach dem Oberbegriff des Anspruchs 1.

Optische Kabel bestehen im allgemeinen aus einer oder mehreren optischen Fasern, welche zusammen mit Zugentlastungselementen von einem Außenmantel umgeben sind. Die optische Faser wird im allgemeinen zum Schutz vor mechanischen Beanspruchungen in einen Mantel eingebettet, welcher direkt nach dem Ziehen der Faser aus der Ziehzwiebel aufgebracht wird. Dieser Schutzmantel besteht im allgemeinen aus einem zweischichtigen Aufbau.

Die optische Faser ist wegen ihrer Empfindlichkeit gegen Dehnung und Stauchung durch weitere Maßnahmen besonders zu schützen.

Aus der DE-OS 32 19 455 ist ein Lichtwellenleiter mit einer mehrlagigen Schutzschicht bekannt, welche unmittelbar auf dem Lichtwellenleiter eine erste Beschichtung, eine weiche Zwischenschicht und einen harten Mantel aufweist. Die weiche Zwischenschicht dient als Polsterschicht und hat die Aufgabe, Querkräfte von der Faser fernzuhalten. Die harte Mantelschicht wiederum soll verhindern, daß die von außen angreifenden Kräfte eine Verformung des Lichtwellenleiters bewirken können. Die äußere harte Mantelschicht dient auch als Zugentlastung.

Ähnliche Kabel werden in US-A- 4,761,053 und US-A- 4,741,594 beschrieben.

Der Erfindung liegt die Aufgabe zugrunde, ein optisches Kabel zu schaffen, welches sich leicht biegen und tordieren läßt, wobei jedoch die optische Faser nur geringfügig gedehnt oder gestaucht wird. Außerdem sollen bei geringem Leitungsgewicht und geringem Querschnitt des optischen Kabels Kräfte in der Größenordnung von 200 N ohne Beschädigung der optischen Faser beherrscht werden.

Vorzugsweise eignet sich das optische Kabel als Installationselement, zum nachträglichen Einziehen in Installationskanäle und für Fernsteuerzwecke.

Vorteile gegenüber dem Stand der Technik sind hohe Biegsamkeit, geringes Gewicht und geringe Abmessungen bei hoher Reißfestigkeit.

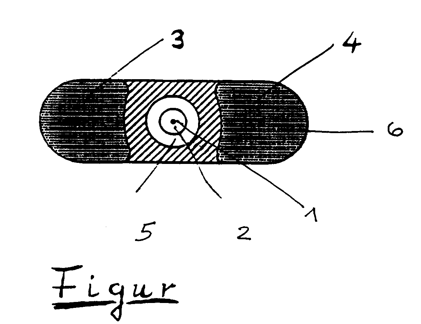

Ein Ausführungsbeispiel der Erfindung wird nachstehend anhand der Zeichnung näher erläutert; dabei zeigt die Figur ein optisches Kabel mit mit einer optischen Faser 1, bestehend aus Kern und Mantel sowie einer Schutzhülle 2, bestehend aus mindestens einer Schicht aus einem Polymer. Diese optische Faser ist außerdem in eine Polsterschicht 5 eingebettet, welche die optische Faser mit den beiden Zugentlastungselementen 3 und 4 verbindet. Die Zugentlastungselemente 3 und 4 sind symmetrisch zur optischen Faser angeordnet und nehmen insgesamt zwei Drittel der Querschnittsfläche des bändchenförmigen Kabels ein. Die Anordnung aus Zugentlastungselementen und gepolsterter optischer Faser wird von einem dünnen Außenmantel 6 umgeben. Der Außenmantel hat die Funktion, die einzelnen Bestandteile fest miteinander zu verbinden und nach außen eine möglichst glatte Oberfläche zu erzeugen. Diese Oberfläche stellt angenähert ein abgerundetes Rechteck dar. Als Material für den Außenmantel 6 kommt in erster Linie ein Polyamid, wie beispielsweise Nylon, infrage. Für die Polsterschicht kommt einerseits Polyamid, andererseits auch ein weicheres Material, wie z.B. ein Fluorelastomer infrage.

Vorzugsweise bestehen die Zugentlastungselemente 3 und 4 aus verdrehten Rovings, d.h. einem Zwirnsfaden, welcher aus drei Rovings mit einer Schlaglänge von etwa 5 mm zusammengedreht ist. Der Durchmesser des Zwirns beträgt 0,4 mm. Die Rovings sind vorzugsweise ungefüllt. Die beiden Zugentlastungselemente 3 und 4 sind im Gegenschlag verdrallt, so daß sich ein fast torsionsfreier Kabelaufbau ergibt.

Bei einer weiteren Ausgestaltung der Erfindung können auch mehrere optische Fasern in die Polsterschicht 5 eingebettet sein. Die Zugentlastungselemente sind dann gegebenenfalls mit größerem Querschnitt zu versehen. Die Schlaglänge der Rovings beträgt im Falle von drei optischen Fasern etwa 10 mm.

## Patentansprüche

1. Optisches Kabel mit einer in eine Polsterschicht (5) eingebetteten optischen Faser, welche aus Kern und Mantel als eigentlichen Lichtwellenleiter und einer Kunststoffschicht (2) als Oberflächenschutz besteht, mit Zugentlastungselementen und einem Außenmantel, wobei der Außenmantel (6) bezüglich seiner Stärke so gewählt ist, daß er die Zugentlastungselemente (3, 4) und die optische Faser (1) miteinander Verbindet und fixiert und sich eine glatte Außenfläche des Außenmantels ergibt, dadurch gekennzeichnet, daß zwei symmetrisch zur optischen Faser angeordnete parallel laufende Zugentlastungselemente (3, 4) vorgesehen sind, welche aus verdrehten Rovings bestehen, daß jeder der Rovings (3, 4) einen einheitlichen Drall aufweist und die Rovings (3, 4) im Gegenschlag verdreht sind, so daß ein Roving (3) einen Gegendrall bezüglich des anderen Rovings (4) aufweist und damit ein fast torsionsfreier Kabelaufbau erzielt wird.

2. Optisches Kabel nach Anspruch 1, dadurch gekennzeichnet, daµ die Rovings mit einer Schlaglänge von 5 mm bis 10 mm verdreht sind.

3. Optisches Kabel nach einem der Ansprüche 1 bis 2, dadurch gekennzeichnet, daß die Rovings (3, 4) einen Durchmesser von etwa 0,4 mm aufweisen.

4. Optisches Kabel nach einem der Ansprüche 1 bis 3, dadurch gekennzeichnet, daß für die Rovings (3, 4) Glasfasern verwendet werden.

5. Optisches Kabel nach einem der Ansprüche 1 bis 4, dadurch gekennzeichnet, daß für die Rovings (3, 4) Aramidfasern verwendet werden.

6. Optisches Kabel nach einem der Ansprüche 1 bis 5, dadurch gekennzeichnet, daß der Kabelquerschnitt annähernd ein Rechteck mit abgerundeten Ecken darstellt und eine Breite von 0,8 bis 2 mm sowie eine Höhe von 0,25 bis 1 mm aufweist.

7. Optisches Kabel nach einem der Ansprüche 1 bis 6, dadurch gekennzeichnet, daß mehr als eine optische Faser zur Nachrichtenübertragung zwischen den Zugentlastungselementen (3, 4) vorgesehen sind.

8. Optisches Kabel nach einem der Ansprüche 1 bis 7, dadurch gekennzeichnet, daß die Polsterschicht (5) aus Nylon besteht.

9. Optisches Kabel nach einem der Ansprüche 1 bis 8, dadurch gekennzeichnet, daß die Polsterschicht (5) aus Polyethylen besteht.

10. Optisches Kabel nach einem der Ansprüche 1 bis 9, dadurch gekennzeichnet, daß der Außenmantel (6) aus Nylon besteht.

11. Optisches Kabel nach einem der Ansprüche 1 bis 10, dadurch gekennzeichnet, daß die Rovings (3, 4) ungefüllt sind.

12. Optisches Kabel nach einem der Ansprüche 1 bis 11, dadurch gekennzeichnet, daß die Rovings (3, 4) gefüllt sind.

## Claims

1. Optical cable having an optical fibre which is embedded in a bedding layer (5) and consists of a core and cladding as the actual optical waveguide and a plastic coating (2) as surface protective coating, and having stress members and an outer sheath, the thickness of the outer sheath (6) being selected such that the latter joins and fixes the stress members (3, 4) and the optical fibre (1) to one another and a smooth outer surface of the outer sheath is produced, characterized in that provision is made of two stress members (3, 4) which extend symmetrically parallel to the optical fibre and consist of twisted rovings, in that each of the rovings (3, 4) has a uniform twist and the rovings (3, 4) in the counter-lay are twisted such that a roving (3) has a counter-twist with respect to the other roving (4) and thus a virtually torsion-free cable design is achieved.

2. Optical cable according to Claim 1, characterized in that the rovings are twisted with a pitch of 5 mm to 10 mm.

3. Optical cable according to one of Claims 1 to 2, characterized in that the rovings (3, 4) have a diameter of approximately 0.4 mm.

4. Optical cable according to one of Claims 1 to 3, characterized in that glass fibres are used for the rovings (3, 4).

5. Optical cable according to one of Claims 1 to 4, characterized in that aramid fibres are used for the rovings (3, 4).

6. Optical cable according to one of Claims 1 to 5, characterized in that the cable cross-section approximately represents a rectangle with rounded corners and has a width of 0.8 to 2 mm and has a height of 0.25 to 1 mm.

7. Optical cable according to one of Claims 1 to 6, characterized in that more than one optical fibre is provided between the stress members (3, 4) for the purpose of communication.

8. Optical cable according to one of Claims 1 to 7, characterized in that the bedding layer (5) consists of nylon.

9. Optical cable according to one of Claims 1 to 8, characterized in that the bedding layer (5) consists of polyethylene.

10. Optical cable according to one of Claims 1 to 9, characterized in that the outer sheath (6) consists of nylon.

11. Optical cable according to one of Claims 1 to 10, characterized in that the rovings (3, 4) are unfilled.

12. Optical cable according to one of Claims 1 to 11, characterized in that the rovings (3, 4) are filled.

## Revendications

1. Câble optique comportant une fibre optique qui est enrobée dans une couche de rembourrage (5) et qui est constituée d'un coeur et d'une gaine comme guide d'ondes lumineuses proprement dit et d'une couche de plastique (2) comme protection de surface, avec des éléments de décharge de la traction et une enveloppe extérieure, câble dans le cas duquel on choisit l'enveloppe extérieure (6), en ce qui concerne son épaisseur, de façon telle qu'elle relie ensemble les éléments 3, 4 de décharge de la traction et la fibre optique (1) et les fixe et donne une surface extérieure lisse de l'enveloppe extérieure, câble caractérisé par le fait que sont prévus deux éléments (3, 4) de décharge de la traction qui sont disposés symétriquement par rapport à la fibre optique et parallèlement à cette fibre et qui sont constitués de mèches retordues, par le fait que chacune des mèches (3, 4) présente un tors homogène et que les mèches (3, 4) sont retordues à pas opposé, de sorte qu'une mèche (3) présente un tors opposé à celui de l'autre mèche (4), et que l'on obtient ainsi une structure de câble presque sans torsion.

2. Câble optique selon la revendication 1, caractérisé par le fait que les mèches sont retordues au pas de 5 mm à 10 mm.

3. Câble optique selon l'une des revendications 1 à 2, caractérisé par le fait que les mèches (3, 4) présentent un diamètre d'environ 0,4 mm.

4. Câble optique selon l'une des revendications 1 à 3, caractérisé par le fait que pour les mèches (3, 4), on emploie des fibres de verre.

5. Câble optique selon l'une des revendications 1 à 4, caractérisé par le fait que pour les mèches (3, 4), on emploie des fibres d'aramide.

6. Câble optique selon l'une des revendications 1 à 5, caractérisé par le fait que la section du câble représente approximativement un rectangle aux angles arrondis et présente une largeur de 0,8 à 2 mm ainsi qu'une hauteur de 0,25 à 1 mm.

7. Câble optique selon l'une des revendications 1 à 6, caractérisé par le fait que plus d'une fibre optique pour transmission de l'information sont prévues entre les éléments (3, 4) de décharge de la traction.

8. Câble optique selon l'une des revendications 1 à 7, caractérisé par le fait que la couche de rembourrage (5) est constituée de nylon.

9. Câble optique selon l'une des revendications 1 à 8, caractérisé par le fait que la couche de rembourrage (5) est constituée de polyéthylène.

10. Câble optique selon l'une des revendications 1 à 9, caractérisé par le fait que l'enveloppe extérieure (6) est constituée de nylon.

11. Câble optique selon l'une des revendications 1 à 10, caractérisé par le fait que les mèches (3, 4) ne contiennent pas de charge.

12. Câble optique selon l'une des revendications 1 à 11, caractérisé par le fait que les mèches (3, 4) contiennent une charge.
